# EUROPÄISCHE PATENTSCHRIFT

(11) **EP 1 460 095 B1**
(45) Veröffentlichungstag und Bekanntmachung des Hinweises auf die Patenterteilung: **01.08.2007**
(21) Anmeldenummer: 04004308.5
(22) Anmeldetag: 26.02.2004
(51) Int. Cl.: C08G 18/48, C08G 18/73, C09D 175/08, C08J 5/18, C08K 3/36, C08K 3/22

(54) **Verwendung einer Polyurethanmasse für die Herstellung von Folien**
Use of a polyurethane composition for the production of films
Utilisation d'une composition de polyuréthane pour la fabrication de films

(30) Priorität: 18.03.2003 DE 10312063
(43) Veröffentlichungstag der Anmeldung: 22.09.2004
(73) Patentinhaber: Otto Bock Schaumsysteme GmbH, 37115 Duderstadt (DE)
(72) Erfinder: Gansen, Peter Dr., 37136 Seeburg (DE); Hagel, Guido, 37115 Duderstadt (DE)
(74) Vertreter: Läufer, Martina

(56) Entgegenhaltungen:
- EP-A- 0 379 246
- EP-A- 0 805 186
- EP-A- 1 095 993
- US-A- 3 460 969
- SHEININA L S ET AL: "STRUCTURIZING ACTION OF AEROSIL ON THE FORMATION OF THE NETWORK STRUCTURE OF POLYURETHANES" POLYMER SCIENCE USSR, PERGAMON PRESS LTD. OXFORD, GB, Bd. 29, Nr. 10, 1987, Seiten 2411-2417, XP000026159

## Beschreibung

Die Erfindung betrifft die Verwendung einer Polyurethanmasse für die Herstelllung und Schichtung von Folien, insbesondere Sprühfolien, aber auch Gußfolien, sowie ein Verfahren zur Herstellung dieser Folien.

Polyurethan-Folien oder -Filme werden industriell verwendet, beispielsweise als dekorative Sichtmaterialien, als Schutzfolien oder Trennfolien oder zur Ummantelung anderer Kunststoffprodukte, beispielsweise von Schaumstoffen, Polyurethanen, komplex aufgebauten Composit-Werkstoffen wie z.B. in Kissen, Panelen, Armaturen usw..

Grundsätzlich kann man den dünnen Polyurethan-Film, der beispielsweise ein Dicke von 0,1 bis 5,0 mm haben kann, auf das betreffende Produkt direkt aufbringen und erhält damit eine Polyurethan-Beschichtung. Der Film oder die Folie kann jedoch mit bestimmten Polyurethanmassen auch separat hergestellt werden. Dafür wird die Polyurethanmasse z.B. auf einen bandförmigen Träger beschichtet und von diesem nach Ausreagieren des Polyurethans wieder abgezogen. Die Polyurethanmasse kann auch in dünner Schicht in eine Form eingebracht und nach dem Aushärten entformt werden. In eine solche geformte Folie können anschließend flüssige oder weiche Werkstoffe, insbesondere aber halbharte oder weiche Schaumstoffe, eingebracht werden.

Das Aufbringen einer solchen Beschichtung oder das Herstellen einer Folie auf einem Träger oder in einer Form kann beispielsweise durch Sprühen mit als solches bekannten Sprühtechniken und -vorrichtungen erfolgen, wobei heute u.a. aus umwelttechnischen Gründen das Versprühen lösungsmittelfreier, hinlänglich niedrigviskoser Massen für viele Anwendungsfälle bevorzugt ist.

Unter einer Polyurethanmasse wird hier eine Mischung der Polyurethan-Ausgangsstoffe bzw. Ausgangskomponenten verstanden, die innerhalb einer bestimmten Reaktionszeit zu einem Polymerwerkstoff - beispielsweise in Form einer Folie - abreagiert. Die Masse ist flüssig bis hochviskos oder weich und kann unmittelbar nach dem Vermischen der Reaktionskomponenten beliebig geformt werden. Die physikalischen und mechanischen Eigenschaften des erhaltenen Werkstoffs hängen von den Polyurethan-Komponenten und gegebenenfalls dem Vorhandensein weiterer Additive ab. Durch niedermolekulare lineare Glykole oder Amine (Kettenverlängerer) werden Hartsegmente gebildet, die dem Werkstoff mehr Festigkeit bzw. das gewünschte Eigenschaftsprofil verleihen. Einzelheiten zur Wirkung von Vernetzern und Kettenverlängerern finden sich im Polyurethane Handbook (Polyurethane Handbook 2nd. Edition, Hanser Publisher, Munich Vienna New York (1994) 37-47.

Für die Herstellung einer Folie kann eine Polyurethanmasse aus allen AusgangsKomponenten frisch hergestellt und unmittelbar verarbeitet werden, ohne dass Prepolymerisate eingesetzt würden. Ein solches Verfahren wird auch als "one shot"-Verfahren bezeichnet. Wegen des hohen Gehalts an freien Isocyanat-Gruppen sind one-shot-Systeme sehr feuchtigkeitsempfindlich und daher schwierig zu verarbeiten. Durch das bei der Polyurethanreaktion und der Vernetzung gebildete Reaktionswasser können in der Folie Bläschen entstehen, die die Qualität der Folie oder Beschichtung beeinträchtigen.

Aus der US 4 695 618 ist eine Polyurethanbeschichtung bekannt, die aus einer Isocyanat-Komponente, i.a. MDI, und einer Härter-Komponente aus Polyolen oder Polyaminen, Glykolen, und gegebenenfalls einem Vernetzer aus Polyaminen oder Alkanolaminen gebildet wird. Dem Problem der Wasserempfindlichkeit wird dadurch zu begegnen versucht, dass 1 bis 20 Gew.-% Adsorptionsmittel zur Adsorption von Feuchtigkeit und Kohlendioxid zugegeben werden. Als Adsorptionsmittel werden die im Stande der Technik bekannten starken Trocknungsmittel (Wasserbindemittel) Kalziumsulfat, Kalziumoxid oder synthetische Zeolith-Molekularsiebe eingesetzt. Das Beschichtungsmittel ist nicht für die Herstellung von Folien vorgesehen.

Aus der EP 379 246 ist ein durch Sprühen herstellbarer, lichtstabiler Polyurethan-Film bekannt, welcher aus einer genauer bestimmten polyurethanbildenden Masse mit wenigstens einem Kettenverlängerer und/oder Quervernetzungsmittel in Anwesenheit eines metallorganischen katalytischen Systems und mindestens eines Amininitiators mit einer Funktionalität zwischen 2 und 6, einem Äquivalentgewicht ≤ 200 und wenigstens einer primären oder sekundären aliphatischen Amingruppe erhalten wird. Auch bei diesem System kann die Bläschenbildung, die durch den Amininitiator verstärkt wird, ein Problem darstellen.

Die EP-A-1 095 993 offenbart ein Verfahren zur Herstellung eines selbstklebenden Artikels, bei welchem eine Zweikomponenten-Polyurethanmasse als Trägerfolie auf ein mit einer druckempfindlichen Haftklebemasse beschichtetes Trägermaterial auflaminiert wird. Das mit der Haftklebemasse beschichtete Trägermaterial kann vorzugsweise ein Trennpapier sein. Die Polyurethanträgerfolie kann auf diese Weise vergleichsweise dünn hergestellt werden. Der Artikel kann kontinuierlich hergestellt und aufgewickelt werden.

Die EP-A-0 805 186 beschreibt einen Lack aus einer Sol-/Gel-Beschichtung mit Polymergehalt. Als reaktives Sol wird ein solches auf- Siliziumdioxid oder Aluminiumoxidbasis verwendet. Als Lackbinderpolymer ist eine Polyurethanmasse vorgesehen, die vorzugsweise mit einem Metall basierten Katalysator umgesetzt wird.

In der US-A-3,460,969 wird dargestellt, wie gelöste Polyurethane mit einem tixotropen Mittel zur Heraufsetzung der Viskosität versetzt werden kann, um bei einer hieraus erhaltenen Beschichtung durch nachträgliches Extrahieren des Lösungsmittels eine lederartige Oberfläche hervorzurufen.

Das Problem der Erfindung besteht darin, eine lösungsmittelfrei gut verarbeitbare Polyurethanmasse zu finden, die zu einem in praktikablen Entformzeiten frei entformbaren Film mit guten physikalischen und mechanischen Eigenschaften führt. Weiterhin sollte der Film bei bestimmten Anwendungen unter Lichteinfluss nicht verfärben. Bei allen Arten von Dekorfolien in Automobilen, wie sie beispielsweise für Instrumententafeln oder Türseitenverkleidungen eingesetzt werden, ist eine Veränderung unter Lichteinfluss nicht akzeptabel.

Zur Lösung dieses Problems ist für die Herstellung frei entformbarer Folien erfindungsgemäß die Verwendung einer Polyurethanmasse vorgesehen, die folgende bei Lagerung wenigstens teilweise separierte Komponenten enthält:
(A) ein Di- bzw. Polyisocyanat
(B) eine für eine Polyurethanreaktion aktiven Wasserstoff enthaltende Verbindung;
(C) einen Katalysator oder ein die Polyurethan-Reaktion katalysierendes System;
(D) ein hochdisperses Oxid eines Metalls oder Metalloids als Additiv; in Konzentrationen von mehr als 3 Gew.-%.
(E) Gegebenenfalls Zusatzstoffe, welche für die Herstellung eines besonderen Eigenschaftsprofils notwendig sind, bei Abwesenheit von Amininitiatoren.

In Komponente (A) werden bevorzugt Isocyanate eingesetzt, bei welchen die Isocyanatgruppen nicht direkt an eine aromatische Gruppe gebunden sind, d.h. insbesondere aliphatische oder alicyclische Isocyanate oder zugehörige Derivate. Es können auch Gemische verschiedener Isocyanate eingesetzt werden.

Als aliphatische Diisocyanate (A) werden übliche aliphatische und/oder cycloaliphatische Diisocyanate eingesetzt, beispielsweise Tri-, Tetra-, Penta-, Hexa- und/oder Oktamethylendiisocyanat, 2-Methyl-pentamethylen-diisocyanat-1,5,2-Ethylbutylen-diisocyanat-1,4, 1-Isocyanato-3,3,5-trimethyl-5-Isocyanatomethyl-cyclohexan (Isophoron-diisocyanat, IPDI), 1,4- und/oder 1,3-Bis(Isocyanatomethyl)cyclohexan (HXDI), 1,4-Cyclohexan-diisocynanat, 1-Methyl-2,4- und/oder -2,6-cyclohexan-diisocyanat, 4,4'-, 2,4'- und/oder 2,2'-Dicyclohexylmethan-diisocyanat (a) eingesetzt. Auch chemische Modifizierungen dieser Produkte wie Allophanate und Biurete können eingesetzt werden. Bevorzugt sind insbesondere Prepolymere der genannten Isocyanate.

Die aktiven Wasserstoff enthaltende Verbindung gemäß Komponente (B) kann zum Beispiel gewählt sein aus Polyolen, Hydroxy-Gruppen-terminierten PU-Prepolymeren, Polyestern. Die zum Einsatz kommenden Polyetherpolyole enthalten mindestens zwei gegenüber Isocyanaten reaktive Wasserstoffatome und weisen Hydroxylzahlen von 20 bis 400 auf. Sie werden erhalten durch Polyaddition von Alkylenoxiden wie beispielsweise Ethylenoxid, Propylenoxid, Butylenoxid, Dodecyloxid oder Styroloxid, vorzugsweise Propylenoxid oder Ethylenoxid an Starterverbindungen wie Wasser, Propylenglykol, Ethylenglykol, Glyzerin, Trimethylolpropan, Pentaerythrit, Sorbit oder andere.

Insbesondere die Mitverwendung von Amin- oder Diamin-gestarteten Polyetherpolyolen kann dazu genutzt werden, um zu Polyurethanfolien mit besseren Weiterreißfestigkeit zu gelangen.

Geeignete Polyesterpolyole sind die an sich bekannten, Hydroxylgruppen aufweisenden Veresterungsprodukte von vorzugsweise zweiwertigen Alkoholen wie beispielsweise Ethylenglykol, Diethylenglykol, Propylenglykol, Neopentylglykol, 1,4-Butandiol, 1,6-Hexandiol mit unterschüssigen Mengen an vorzugsweise difunktionellen Carbonsäuren wie beispielsweise Bernsteinsäure, Adipinsäure, Phthalsäure, Tetrahydrophthalsäure, Hexahydrophthalsäure oder Gemischen derartiger Säuren. Zusätzlich kann ein OH-Gruppen-terminierter Kettenverlängerer oder Vernetzer mit einem Molekulargewicht unter 1000 und einer mittleren Funktionalität zwischen 2 und 6 enthalten sein. Der Zusatz eines aminterminierten Kettenverlängerers und/oder Vernetzers ist jedoch nicht bevorzugt. Aminvernetzer bzw. Amininitiatoren, die zu verstärkter Blasenbildung führen können bei der erfindungsgemäßen Polyurethanmasse vollständig vermieden werden. Typische hydroxyl-funktionelle Produkte sind Etylenglykol, Glyzerin, Trimethylolpropan, 1,4-Butandiol, Propylenglykol, Dipropylenglykol, 1,6 Hexandiol und ähnliche; amin-funktionelle Kettenverlängerer bzw. Amininitiatoren sind Verbindungen wie Diethyltoluylendiamin und andere sterisch gehinderte Amine wie in dem US Patent Nr. 4218543 beschrieben; Phenyldiamin, 1,4-Cyclohexan-bis-(methylamin), Ethylendiamin, Diethylentriamin, N-(2-hydroxypropyl)-ethylendiamin, N,N'-di(2-hydroxy-propyl)ethylendiamin, Piperazin und 2-Methylpiperazin. Weniger bevorzugt ist der Einsatz von Alkanolaminen wie Mono-, Di-, und Triethanolamin als Vernetzer oder Mono-, Di- und Triisopropanolamin.

Bevorzugt ist der Einsatz von hydroxylterminierten - Polyethern mit mehr als 60 % primären OH-Gruppen mit keinen oder geringen Mengen an OH-funktionellen Kettenverlängerer bzw. Vernetzern.

Die Komponente (A) besitzt vorzugsweise bezüglich der Isocyanat-Gruppen, und zwar im engeren Sinne bezüglich der für die Polyurethanreaktion zur Verfügung stehenden Isocyanat-Gruppen, eine mittlere Funktionalität zwischen 2 und 8. Außerdem besitzt das Isocyanat oder besitzen die Komponenten der Isocyanat-Mischung vorzugsweise einen NCO-Gehalt zwischen 8 und 25 %.

Die Komponente (B) besitzt bezüglich der den aktiven Wasserstoff enthaltenden Gruppen, also im allgemeinen der OH-Gruppen, vorzugsweise eine mittlere Funktionalität zwischen 2 und 8. Der Hauptbestandteil der Komponente (B) - im allgemeinen ein Polyetherpolyol bzw. deren Mischungsanteile, besitzt weiterhin vorzugsweise ein mittleres Äquivalentgewicht (E_{w}) zwischen 500 und 4000.

Als Katalysator kann der Polyurethanmasse ein Wismuth-, Titan- oder Zinn-Katalysator beigemischt sein. Bevorzugt ist ein Wismuth-, Titan- und/oder Zinn-Verbindungen enthaltendes katalytisches System, wie als solches im Stand der Technik für Polyurethane bekannt (s. z.B.: Polyurethane Handbook, a.a.o.). Spuren von Wasser können in der Masse in einer Menge von nicht mehr als 0,3 Teilen auf 100 Teile der Komponente (B) enthalten sein.

Die Komponente A wird mit den Komponenten B bis E so umgesetzt, dass die Kennzahl zwischen 85 und 115 liegt. eine Kennzahl von 100 ist das Mischungsverhältnis, bei dem NCO-Gruppen und gegenüber Isocyanat-reaktive Gruppen in gleicher Menge im reaktiven Gemisch vorhanden sind. Eine Kennzahl größer als Hundert bedeutet Isocyanat-Überschuss. Üblicherweise liegen bei dem erfindungsgemäßen Verfahren die eingesetzten Mischungsverhältnisse der Komponenten B bis E zu der Komponente A zwischen 100 : 10 oder 100 : 20 und 100 : 80.

In Weiterbildung der Erfindung kann dem Reaktionsgemisch zusätzlich ein Trennmittel für besseres Ausformen zugesetzt sein. Weitere Zusätze, Füllstoffe und Hilfsmittel sind nicht ausgeschlossen. Beispielsweise können zusätzlich Farbstoffe oder Pigmente, Lichtschutzmittel und andere dem Fachmann auf diesem Gebiet bekannte Zusätze enthalten sein.

Überraschenderweise wurde gefunden, dass die Anwesenheit eines hochdispersen Oxids eines Metalls oder Metalloids als Additiv die physikalischen und insbesondere mechanischen Eigenschaften der mit der Masse hergestellten Folie ganz erheblich verbessert, so dass auf die Anwesenheit eines für eine hinreichend kurze Entformungszeit früher zugesetzten Amininitiators völlig verzichtet werden kann, was gleichzeitig die Gefahr der Blasenbildung deutlich vermindert. Die durch das Additiv erheblich verbesserten mechanischen Eigenschaften ermöglichen es weiter, auf einen Vernetzer und/oder Kettenverlängerer zu verzichten oder dessen Gehalt herabzusetzen. Dieser Befund ist erstaunlich, da ein genügender Gehalt an Vernetzer gerade für die Zugeigenschaften, insbesondere die Reißfestigkeit einer dünnen Polyurethanfolie als unerlässlich angesehen werden musste.

Das Additiv kann der Reaktionsmischung, d.h. der Polyurethanmasse, die lösungsmittelfrei weiterverarbeitet werden kann, unmittelbar im Gemisch zugesetzt werden, oder das Additiv kann zuvor mit einer anderen Komponente gemischt werden. Vermischungen sind generell, wie im Stand der Technik üblich, auch für andere Komponenten möglich. Bevorzugt sind Verfahren, bei dem eine Vermischung der Komponenten B-E hergestellt wird, die dann in einem weiteren Schritt mit der Komponente A zur Ausreaktion gebracht wird.

Unter einem hochdispersen Oxid eines Metalls oder Metalloids wird ein extrem feinverteiltes Oxid mit besonders großer Oberfläche verstanden, wie es beispielsweise mittels Flammenhydrolyse aus Salzen der Metalle oder Metalloide erhalten werden kann ("pyrogenes" Oxid). Besonders bevorzugt ist "pyrogene" Kieselsäure, d.h. "pyrogenes" SiO₂, wie unter dem Handelsnamen Aerosil^{®} bekannt. Pyrogene Kieselsäure wird technisch durch Hydrolyse von Siliciumtetrachlorid in einer Knallgasflamme hergestellt. Die amorphen, im wesentlichen kugelförmigen Teilchen besitzen einen Durchmesser von ca. 10 bis 20 nm und werden unter anderem als Füllstoff für Natur- und Synthesekautschuke, Verdickungsmittel für die pharmazeutische und kosmetische Industrie, Tablettier- und Dragierhilfsmittel, Antiabsetzmittel und Thixotropiermittel eingesetzt. Besonders bevorzugt wird ein (wenigstens an der Oberfläche) hydrophobiertes pyrogenes Siliciumdioxid eingesetzt, insbesondere Aerosil R 972, welches mittels Dichlordimethylsilan hydrophobiert ist, oder auch die Aerosile R 974, R 202, R 805, R 812, R 812 S, R 104 oder R 106.

Anstelle des pyrogenen Siliziumdioxids oder im Gemisch damit kann unter anderem auch Aluminiumoxid oder Titanoxid verwendet werden. Diese Oxide oder Mischungen dieser Oxide können auch geringere Mengen anderer Oxide von Metallen oder Metalloiden enthalten, beispielsweise kann Eisenoxid enthalten sein.

Die Erfindung umfasst weiter ein Verfahren zur Herstellung einer frei entformbaren Folie aus der vorstehend beschriebenen Polyurethanmasse, welches dadurch gekennzeichnet ist, dass man die kurz vorher vermischte Masse in einem oder mehreren Durchgängen auf eine glatte Fläche oder in eine Form sprüht und ausreagieren lässt. Das Aufsprühen erfolgt bevorzugt so, dass eine Schichtdicke von 0,1 - 5 mm, bevorzugt 0,1 - 3 mm, weiter bevorzugt 0,1 - 2 mm erzeugt wird. Alternativ kann die Folie auch gegossen werden. Es ist ohne weiteres möglich, die erfindungsgemäße Polyurethanmasse in üblicher Weise nach einem RIM-Verfahren (Reaction Injection Moulding) zu verarbeiten, wobei die gleichen vorteilhaften Eigenschaften wie beim Sprühen erhalten werden.

Für die Anwendung üblicher Sprühverfahren (Sprayverfahren), wie sie bereits zum Aufbringen von Beschichtungen und zum Herstellen von Folien in der Urethanchemie, aber auch sonst seit langer Zeit, beispielsweise für Lackierungen, bekannt sind, ist es in Weiterbildung der Erfindung bevorzugt, dass die Einzelkomponenten (A bzw. B bis E) auf eine Viskosität von 50 - 1000 mPas eingestellt werden.

Die Komponenten oder die gesamte Masse werden vorzugsweise vor der Verarbeitung erwärmt und zwar auf ca. 40 bis 90 °C, vorzugsweise 50 °C bis 90 °C.

Die Komponenten oder auch Mischungsbestandteile der Polyurethanmasse werden vorzugsweise zunächst in zwei Gruppen zusammengefasst , innerhalb der Gruppen vorgemischt und getrennt bis zur Verarbeitung gelagert. Die erste Gruppe enthält die Isocyanat-Komponente (A), die zweite Gruppe enthält die Komponente (B). In der ersten und/oder der zweiten Gruppe können gegebenenfalls zusätzlich die oben genannten Zusatzstoffe, wie UV-Fänger, Antioxiantien, Trennmittel, Flammschutzmitel usw. enthalten sein. Das katalytische System wird mit den anderen Komponenten der Komponente B zugegeben. Das hochdisperse Oxid wird vorzugsweise der Komponente B in einem vorgelagerten Schritt zugemischt. Anstelle der Zwei- oder Mehrkomponenten-Vorschmischungen kann die Masse auch insgesamt vorgemischt und gekühlt unter Luftausschluss oder Stickstoff gelagert werden.

Die mit dem Verfahren hergestellte Polyurethanfolieenthält vorzugsweise ein hochdisperses Oxid eines Metalls oder Metalloids als Additiv in einem Gewichtsanteil von 7 bis 18 %. Die Polyurethanfolie kann besonders vorteilhaft für z.B. lnstrumentetafelhäute, Türseitenverkleidungen, Sitze, Sättel und ähnliches verwendet werden.

Im Folgenden wird die Erfindung anhand von Beispielen näher erläutert:

### BEISPIELE:

Bei den folgenden Beispielen wurden die folgenden Rohstoffe eingesetzt:

### Polyether 1:

Polyethertriol der OH-Zahl 28 hergestellt durch Propoxylierung von Glyzerin mit anschließender Ethoxylierung des Propoxylierungsproduktes (PO:EO-Gewichtsverhältnis ≅ 82 : 18)

### Polyether 2:

Polyethertriol der OH-Zahl 36 hergestellt durch Propoxylierung von Glyzerin mit anschließender Ethoxylierung des Propoxylierungsproduktes (PO:EO-Gewichtsverhältnis ≅ 85:15)

### Polyether 3:

Polyethertriol der OH-Zahl 44 hergestellt durch Propoxylierung von Glyzerin mit anschließender Ethoxylierung des Propoxylierungsproduktes (PO:EO-Gewichtsverhältnis ≅ 87 : 13)

### Isocyanat:

Lineares Prepolymer auf der Basis von Hexamethylendiisocyanat mit einem NCO-Gehalt von 12,5 % und einer Viskosität von 5000 mPAS.

### Katalysator 1:

Metallkatalysator in Form einer Abmischung aus 58 % Bismuttrisneodecanoat und 42 % Neodecansäure.

### Katalysator 2:

Aminkatalysator basierend N,N-Dimethylbenzylamin.

### Vernetzer 1 :

Zweiwertiger Alkohol ohne weitere funktionelle Gruppen basierend auf Monoethylenglycol (1-2-Ethandiol, MEG, Ethylenglycol).

### Alterungs- und Lichtschutz:

Bestehend aus einer Abmischung (Tinuvin B 75) von 20 % phenolisches Antioxidant, 40 % UV-Absorber und 40 % sterisch gehinderter aminischer Lichtschutz.

### Zeolithpaste:

Entwässerungsmittel bestehend aus 30 % Aluminiumsilicat-Zeolith in T- oder L-Form angepastet in 70 % Rizinusöl. Der durchschnittliche Porendurchmesser des verwendeten T- oder L-Zeolith liegt bei 4 Å.

### Farbpigmentpaste:

Farbpaste basierend auf 10 - 52 % Farbpigmenten (< 50 µm Partikelgröße) angepastet in Polyethertriol (OH-Zahl = 28)

Siliziumdioxid 1: Hydrophobes pyrogenes strukturmodifiziertes Siliziumdioxid, welches nur einen unwesentlichen Viskositätsanstieg bewirkt.

Siliziumdioxid 2: Hydrophobes pyrogenes Siliziumdioxid, welches als Thixtropierungsmittel eingesetzt wird.

Die Versuche wurden mit einer konventionellen Hochdruck-Sprühmaschine der Firma Hilger und Kern durchgeführt. Die beiden Komponenten wurden in einem Statikmischer vermischt. Der Polyoldruck vor dem Statikmischer betrug etwa 300 bar, der Isocyanatdruck lag bei 200 bar. Die Rohstofftemperaturen auf der Polyol- und der Isocyanatseite lagen bei etwa 80 °C.

Die folgende Übersicht zeigt die verschiedenen Resultate. Bei der Rezeptur 2 handelt es sich um ein nicht erfindungsgemäßes Vergleichsbeispiel.

| Rezeptur Produkt | 1 Gew.-TI. | 2 * Gew.-TI. | 3 Gew.-TI. | 4 Gew.-TI. | 5 Gew.-TI. | 6 7 8 Gew.-TI. | Gew.-TI. | Gew.-TI. | 9 Gew.-TI. |
|---|---|---|---|---|---|---|---|---|---|
| Polyether 1 | 85 | 100 | 85 | 85 | 85 | | | | |
| Polyether 2 | | | | | | 85 | | | |
| Polyether 3 | | | | | | | 85 | 90 | 90 |
| Siliziumdioxid 1 | 15 | | 15 | 15 | 15 | 15 | 15 | 10 | 10 |
| Siliziumdioxid 2 | 1,5 | 1,5 | 1,5 | 1,5 | 1,5 | 1,5 | 1,5 | 1,5 | 1,5 |
| Katalysator 1 | 1,0 | 1,0 | 1,0 | 1,0 | 1,0 | 1,0 | | 1,0 | 2,0 |
| Katalysator 2 | | | | | | | 3,0 | | |
| Vernetzer 1 | | | 2 | 2 | 2 | | | | |
| Alterungs- und Lichtschutz | 1 | 1 | 1 | 1 | 1 | 1 | 1 | 1 | 1 |
| Zeolithpaste | | | | | 5 | | 5 | 5 | 5 |
| Farbpigmentpaste | 5 | 5 | 5 | 5 | 5 | 5 | 5 | 5 | 5 |
| Isocyanat (MV) | 100 : 15 | 100: 17 | 100 : 34 | 100: 34 | 100 : 35 | 100: 18 | 100: 24 | 100 : 26 | 100: 26 |
| Kennzahl | 110 | 105 | 105 | 105 | 105 | 105 | 105 | 108 | 108 |
| Rohdichte [kg/m³] | 872 | 909 | 807 | 790 | 796 | 859 | 953 | 876 | 896 |
| Zugfestigkeit [kgPa] | 593 | 828 | 282 | 2193 | 2335 | 1298 | 1603 | 1261 | 1630 |
| Bruchdehnung [%] | 589 | 173 | 404 | 462 | 383 | 435 | 262 | 105 | 127 |
| Weiterreißfestigkeit [N/mm] | 3,17 | 1,31 | 2,37 | 7,02 | 9,33 | 5,02 | 9,57 | 4,84 | 5,03 |
| Shore L | 59 | 70 | 62 | 71 | 80 | 62 | 83 | 74 | 82 |
| Shore A | 43 | 48 | 59 | 52 | 67 | 45 | 74 | 52 | 70 |
| Materialstärke | 1,3 | 1,3 | 1,0 | 1,4 | 1,0 | 1,6 | 0,7 | 1,2 | 0,9 |

| | | | | | | | | | |
|---|---|---|---|---|---|---|---|---|---|
| * vergleichsbeispiel | | | | | | | | | |

Der Vergleich der Resultate von Versuch 1 mit dem Vergleichsbeispiel (Versuch 2) zeigt den wesentlichen Unterschied zwischen den erfindungsgemäßen Folien und dem Stand der Technik. Durch die Mitverwendung der hohen Anteile des pyrogenen Siliziumdioxids verbessert sich das Eigenschaftsniveau außerordentlich. Verglichen mit dem Versuch 2 steigt die Bruchdehnung auf das Dreifache und die Weiterreißfestigkeit ist mehr als doppelt. Des weiteren wirkt sich die Mitverwendung des Siliziumdioxids positiv auf das Entformverhalten aus. Verglichen mit dem Vergleichsbeispiel lässt sich die gesprühte Haut etwa nach der Hälfte der Zeit entformen.

## Patentansprüche

1. Verwendung einer Polyurethanmasse mit folgenden bei Lagerung wenigstens teilweise separierten Komponenten für die Herstellung frei entformbarer Folien:
(A) einem Di- bzw. Polyisocyanat,
(B) einer für eine Polyurethanreaktion aktiven Wasserstoff enthaltenden Verbindung,
(C) einem Katalysator oder einem die Polyurethan-Reaktion katalysierenden System,
(D) einem hochdispersen Oxid eines Metalls oder Metalloids als Additiv in einer Konzentration von mehr als 3 Gew.-%
(E) gegebenenfalls Zusatzstoffen
bei Abwesenheit von Amininitiatoren.

2. Verwendung nach Anspruch 1, **dadurch gekennzeichnet, dass** in Komponente (A) ein Isocyanat eingesetzt wird, bei welchem die Isocyanatgruppen nicht direkt an eine aromatische Gruppe gebunden sind, insbesondere aliphatische oder alicyclische Isocyanate oder zugehörige Derivate.

3. Verwendung nach Anspruch 1 oder 2, **dadurch gekennzeichnet, dass** die aktiven Wasserstoff enthaltende Verbindung gemäß Komponente (B) ausgewählt ist aus Polyolen, insbesondere mit mehr als 60 % primären OH-Gruppen.

4. Verwendung nach einem der Ansprüche 1 bis 3, **dadurch gekennzeichnet, dass** die Komponante (A) eine mittlere Funktionalität zwischen 2 und 3 und einen NCO-Gehalt von 8 - 25 % und die Komponente (B) eine mittlere Funktionalität zwischen 2 und 8 besitzt.

5. Verwendung nach einem der Ansprüche 1 bis 4, **dadurch gekennzeichnet, dass** als Katalysator ein Blei-, Wismuth-, Titan- oder Zinn-Katalysator oder ein Blei-, Wismuth-, Titan- und/oder Zinn-Verbindungen enthaltendes System enthalten ist.

6. Verwendung nach einem der Ansprüche 1 bis 5, **dadurch gekennzeichnet, dass** die Spuren von Wasser in einer Menge von nicht mehr als 0,3 Teilen auf 100 Teile der Komponente (B) enthalten sind.

7. Verwendung nach einem der Ansprüche 1 bis 6, **dadurch gekennzeichnet, dass** zusätzlich ein OH-Gruppen-terminierter Kettenverlängerer oder Vernetzer mit einem Molekulargewicht unter 1000 und einer mittleren Funktionalität zwischen 2 und 6 enthalten ist.

8. Verwendung nach einem der Ansprüche 1 bis 7, **dadurch gekennzeichnet, dass** das Verhältnis der Komponenten (A) : (B-E) 15 : 100 bis 40 : 100 beträgt.

9. Verwendung nach einem der Ansprüche 1 bis 8, **dadurch gekennzeichnet, dass** der Gewichtsanteil der Komponente (C) zwischen 0,03 und 5 % beträgt.

10. Verwendung nach einem der Ansprüche 1 bis 9, **dadurch gekennzeichnet, dass** der Gewichtsanteil der Komponente (D) zwischen 3 und 20 % beträgt.

11. Verwendung nach einem der Ansprüche 1 bis 10, **dadurch gekennzeichnet, dass** dem Reaktionsgemisch zusätzlich ein Trennmittel für besseres Ausformen zugesetzt ist.

12. Verwendung nach einem der Ansprüche 1 bis 11, **dadurch gekennzeichnet, dass** das hochdisperse Oxid ein pyrogenes Siliziumoxid, Aluminiumoxid, Titanoxid oder eine Mischung dieser Oxide, insbesondere auch mit geringeren Mengen anderer Oxide von Metallen oder Metalloiden, ist.

13. Verwendung nach Anspruch 12, **dadurch gekennzeichnet, dass** das hochdisperse Oxid ein zumindest an der Oberfläche hydrophobiertes Oxid ist, insbesondere hydrophobierte Kieselsäure.

14. Verfahren zur Herstellung einer frei entformbaren Folie aus einer Polyurethanmasse wie in einem der Ansprüche 1 bis 13 angegeben, **dadurch gekennzeichnet, dass** man die Masse in einem oder mehreren Durchgängen auf eine glatte Fläche oder in eine Form sprüht oder in einem RIM (Reaction Injection Moulding)-Verfahren verarbeitet und ausreagieren lässt.

15. Verfahren nach Anspruch 14, **dadurch gekennzeichnet, dass** das Aufsprühen in der Weise erfolgt, dass eine Schichtdicke von 0,1 - 5 mm, vorzugsweise 0,1 - 3 mm, weiter vorzugsweise 0,1-2 mm erzeugt wird.

16. Verfahren nach Anspruch 14 oder 15, **dadurch gekennzeichnet, dass** die Masse mit einer Temperatur von 40 bis 90 °C gesprüht wird.

17. Verfahren nach einem der Ansprüche 13 bis 15, **dadurch gekennzeichnet, dass** die separierten Komponenten jeweils auf eine Viskosität von 50 bis 1000 mPas eingestellt werden.

## Claims

1. Use of a polyurethane composition having the following components, at least some of which are stored separately, for the production of freely demoldable foils:
(A) a di- or polyisocyanate,
(B) a compound containing hydrogen active in a polyurethane reaction,
(C) a catalyst or a system catalyzing the polyurethane reaction,
(D) a fine-particle oxide of a metal or of a metalloid, as additive at a concentration above 3% by weight,
(E) where appropriate, additives,
in the absence of amine initiators.

2. Use according to Claim 1, **characterized in that**, in component (A), use is made of an isocyanate in which the isocyanate groups have no direct bonding to an aromatic group, in particular aliphatic or alicyclic isocyanates or associated derivatives.

3. Use according to Claim 1 or 2, **characterized in that** the compound of component (B) containing active hydrogen has been selected from polyols, in particular having more than 60% of primary OH groups.

4. Use according to any of Claims 1 to 3, **characterized in that** component (A) has an average functionality of from 2 to 3 and an NCO content of from 8 to 25%, and component (B) has an average functionality of from 2 to 8.

5. Use according to any of Claims 1 to 4, **characterized in that** the composition comprises, as catalyst, a lead catalyst, bismuth catalyst, titanium catalyst, or tin catalyst, or comprises a system in which the lead compounds, bismuth compounds, titanium compounds, and/or tin compounds are present.

6. Use according to any of Claims 1 to 5, **characterized in that** the composition comprises the traces of water, their amount being not more than 0.3 part, based on 100 parts of component (B).

7. Use according to any of Claims 1 to 6, **characterized in that** the composition also comprises an OH-terminated chain extender or crosslinking agent with a molecular weight below 1000 and with an average functionality of from 2 to 6.

8. Use according to any of Claims 1 to 7, **characterized in that** the ratio between the components (A):(B-E) is from 15:100 to 40:100.

9. Use according to any of Claims 1 to 8, **characterized in that** the proportion by weight of component (C) is from 0.03 to 5%.

10. Use according to any of Claims 1 to 9, **characterized in that** the proportion by weight of component (D) is from 3 to 20%.

11. Use according to any of Claims 1 to 10, **characterized in that** a release agent for better demolding has also been added to the reaction mixture.

12. Use according to any of Claims 1 to 11, **characterized in that** the fine-particle oxide is a fumed silicon oxide, aluminum oxide, titanium oxide or is a mixture of these oxides, in particular also with relatively small amounts of other oxides of metals or of metalloids.

13. Use according to Claim 12, **characterized in that** the fine-particle oxide is an oxide hydrophobicized at least on the surface, in particular hydrophobicized silica.

14. Process for producing a freely demorolable foil from a polyurethane composition as defined in any of Claims 1 to 13, **characterized in that** the composition is sprayed in one or more passes onto a smooth surface or into a mold or processed in an RIM (Reaction Injection Moulding) process, and permitted to react to completion.

15. Process according to Claim 14, **characterized in that** the manner of spray-application is such as to give a layer thickness of from 0.1 to 5 mm, preferably from 0.1 to 3 mm, more preferably from 0.1 to 2 mm.

16. Process according to Claim 14 or 15, **characterized in that** the composition is sprayed using a temperature of from 40 to 90°C.

17. Process according to any of Claims 13 to 15, **characterized in that** the viscosity of each of the separated components is set at from 50 to 1000 mPas.

## Revendications

1. - Utilisation d'une masse de polyuréthane pour la fabrication de films librement formables, cette masse présentant les composants suivants qui sont lors de son stockage au moins en partie séparés :
(A) un di-ou polyisocyanate,
(B) un composé renfermant de l'hydrogène actif pour une réaction de formation de polyuréthane,
(C) un catalyseur ou un système catalysant pour la réaction de formation de polyuréthane,
(D)un oxyde hautement dispersé d'un métal ou d'un métalloïde en tant qu'additif dans une concentration de plus de 3% en poids,
(E) éventuellement des produits d'addition, en absence d'initiateurs d'amine.

2. - Utilisation selon la revendication 1, **caractérisée en ce qu'**au composant (A) est ajouté un isocyanate dans lequel les groupes isocyantes ne sont pas directement liés à un groupe aromatique, en particulier des isocyanates aliphatiques ou alicycliques ou des dérivés correspondants.

3. - Utilisation selon la revendication 1 ou 2, **caractérisée en ce que** le composé renfermant de l'hydrogène actif selon le composant (B) est choisi parmi les polyols, en particulier contenant plus de 60% de groupes OH primaires.

4. - Utilisation selon l'une des revendications 1 à 3, **caractérisée en ce que** le composant (A) présente une fonctionnalité moyenne comprise entre 2 et 3 et une teneur en NCO de 8 à 25% et le composant B présente une fonctionnalité moyenne comprise en 2 et 8.

5. - Utilisation selon l'une des revendications 1 à 4, **caractérisée en ce que** le catalyseur est un catalyseur à base de plomb, bismuth, titane ou zinc ou un système de composés renfermant du plomb, du bismuth, du titane et/ou du zinc.

6. - Utilisation selon l'une des revendications 1 à 5, **caractérisée en ce que** les traces d'eau sont présentes dans une quantité n'excédant pas 0,3 parties pour 100 parties du composant (B).

7. - Utilisation selon l'une des revendications 1 à 6, **caractérisée en ce que** la composition renferme en outre un agent d'allongement de chaîne ou réticulant se terminant par des groupes OH ayant un poids moléculaire inférieur à 1000 et une fonctionnalité moyenne comprise entre 2 et 6.

8. - Utilisation selon l'une des revendications 1 à 7, **caractérisée en ce que** le rapport des composants (A) : (B-E) est compris entre 15 : 100 à 40 : 100.

9. - Utilisation selon l'une des revendications 1 à 8, **caractérisée en ce que** la teneur en poids du composant (C) est comprise entre 0,03 et 5%.

10. - Utilisation selon l'une des revendications 1 à 9, **caractérisée en ce que** la teneur en poids du composant (D) est comprise entre 3 et 20%.

11. - Utilisation selon l'une des revendications 1 à 10, **caractérisée en ce que** le mélange réactionnel renferme en outre un agent de séparation pour améliorer le formage.

12. - Utilisation selon l'une des revendications 1 à 11, **caractérisée en ce que** l'oxyde hautement dispersé est de l'oxyde de silicium, de l'oxyde d'aluminium, de l'oxyde de titane pyrogénique ou un mélange de ces oxydes, en particulier également avec une quantité réduite d'autres oxydes de métaux ou de métalloïdes.

13. - Utilisation selon la revendication 12, **caractérisée en ce que** l'oxyde hautement dispersé est un oxyde qui est rendu hydrophobique au moins en surface, en particulier de l'acide silicique rendu hydrophobique.

14. - Procédé pour la préparation d'un film librement formable à partir d'une composition de polyuréthane telle que décrite dans l'une des revendications 1 à 13, **caractérisé en ce que** la composition est dispersée sur une surface ou dans un moule ou traitée selon un procédé RIM (Réaction Injection Moulding) et est laissée à réagir.

15. - Procédé selon la revendication 14, **caractérisé en ce que** la dispersion est effectuée de telle sorte qu'on obtienne une épaisseur de couche de 0,1 à 5mm, de préférence de 0,1 à 3mm, de façon plus préférée de 0,1 à 2mm.

16. - Procédé selon l'une des revendications 14 ou 15, **caractérisé en ce que** la composition est dispersée à une température comprise entre 40 et 90°C.

17. - Procédé selon l'une des revendications 13 à 15, **caractérisé en ce que** les composants séparés sont chacun ajustés à une viscosité de 50 à 1000 m Pas.
